# FASCICULE DE BREVET EUROPEEN

(11) **EP 1 558 920 B1**
(45) Date de publication et mention de la délivrance du brevet: **24.03.2010**
(21) Numéro de dépôt: 03778459.2
(22) Date de dépôt: 24.10.2003
(51) Int. Cl.: G01N 21/90, G01N 21/958

(54) **PROCEDE ET DISPOSITIF D'ECLAIRAGE POUR DETECTER DES DEFAUTS DE SURFACE ET/OU DE MANQUE DE MATIERE SUR LA BAGUE D'UN RECIPIENT**
VERFAHREN UND VORRICHTUNG ZUR DETEKTION VON OBERFLÄCHENFEHLERN UND/ ODER FEHLENDEM MATERIAL EINES RINGFÖRMIGEN GEFÄSSES MIT HILFE EINER BELEUCHTUNG
LIGHTING METHOD AND DEVICE FOR THE DETECTION OF SURFACE DEFECTS AND/OR UNFILLED FINISH ON THE FINISH OF A CONTAINER

(30) Priorité: 25.10.2002 FR 0213358
(43) Date de publication de la demande: 03.08.2005
(73) Titulaire: Tiama, 69700 Montagny (FR)
(72) Inventeur: COLLE, Olivier, F-69600 Oullins (FR); LECONTE, Marc, F-69700 LOIRE SUR RHONE (FR)
(74) Mandataire: Thibault, Jean-Marc
(86) Numéro de dépôt international: PCT/FR2003/003169
(87) Numéro de publication internationale: WO 2004/040280

(56) Documents cités:
- EP-A- 0 336 476
- FR-A- 2 596 523
- US-A- 4 606 635
- US-A- 4 697 076
- US-A- 5 592 286
- US-A- 5 923 419

## Description

La présente invention concerne le domaine technique de l'inspection optoélectronique d'objets creux ou récipients, au sens général, à caractère de préférence transparent ou translucide, tels que, par exemple, des bouteilles, des pots ou des flacons en verre, en vue de déceler d'éventuels défauts de surface présentés par la bague d'un tel récipient.

L'objet de l'invention vise, plus précisément, à détecter, au niveau de la bague d'un objet, des défauts de surface ou des défauts, dits « mal rendus », correspondant à des manques de matière sur la surface (« unfilled finish »).

Dans l'état de la technique, il est connu, pour détecter de tels défauts, un dispositif comportant une source lumineuse fournissant un faisceau lumineux incident éclairant la surface de la bague du récipient. Un tel dispositif de détection comporte, également, une caméra matricielle placée pour récupérer le faisceau lumineux réfléchi par la bague du récipient. La présence d'un défaut perturbe la réflexion de la lumière, ce qui provoque, selon le type de défauts, une extinction ou une surbrillance détectables à l'aide de la caméra matricielle qui est reliée à une unité de traitement et d'analyse, adaptée pour analyser le signal vidéo délivré par la caméra, afin de déterminer la présence ou non d'un défaut de surface et/ou de manque de matière. Un tel dispositif permet ainsi de détecter, en particulier, les défauts de mal rendu correspondant à des manques de matière sur la surface. Un défaut de mal rendu correspond à une partie creuse de la surface de bague qui, normalement, est plane ou arrondie. De tels défauts apparaissent dans une image noire ou sombre sur un fond blanc.

Pour assurer un bon contrôle de la surface de bague des récipients, il convient de maîtriser l'angle incident du flux lumineux par rapport à la surface de la bague. Pour des bagues de tailles réduites, telles que celles présentées par des bouteilles, cet angle incident peut être maîtrisé en changeant la hauteur de la source lumineuse, comme le propose, par exemple, le brevet US 4 606 635 qui décrit un dispositif pour détecter des défauts apparaissant sur la bague d'un récipient. Un tel dispositif comprend une source d'éclairage annulaire délimitée par un cylindre intérieur et un cylindre extérieur définissant entre eux une ouverture de sortie cylindrique dont la hauteur peut être réglée par le déplacement relatif entre les cylindres. Cette source d'éclairage est apte à être déplacée relativement par rapport au récipient à contrôler en vue de régler l'angle d'incidence du faisceau lumineux à caractère diffus.

Un tel dispositif ne se trouve pas adapté pour détecter des défauts apparaissant sur des bagues présentant des surfaces de grandes largeurs en raison, en particulier, d'un angle incident trop faible ne permettant pas d'obtenir un éclairage uniforme de la surface de bague. De plus, pour des récipients présentant des bagues dont la surface est légèrement inclinée vers l'intérieur ou l'extérieur, il s'avère insuffisant de corriger l'angle incident uniquement par le réglage de la hauteur de la source lumineuse. Enfin, il convient de noter qu'un tel dispositif de contrôle ne permet pas de s'adapter aux différents diamètres de bagues présentés par les récipients à contrôler.

Il est connu, par ailleurs, par la demande de brevet FR 2 596 523 un appareil de contrôle d'une capsule pour une bouteille, comportant une source lumineuse annulaire divergente placée au-dessus de la capsule à contrôler. Cet appareil comporte un premier masque optique définissant la plage de rayonnement de la source lumineuse et un deuxième masque optique définissant le champ visuel d'un capteur photoélectrique.

Un tel appareil permet de détecter un défaut sur la partie inférieure d'une capsule de goulot d'une bouteille. Toutefois, un tel appareil ne se trouve pas adapté pour détecter des défauts apparaissant sur la surface de la bague de récipients qui présente, par ailleurs, des pentes, des largeurs et des diamètres différents. De plus, un tel appareil ne permet pas d'éclairer de manière uniforme, des récipients qui présentent des bagues avec des surfaces de grandes largeurs.

L'analyse de l'état de la technique conduit à constater qu'il convient de disposer d'une technique permettant de pouvoir contrôler l'angle incident et/ou la largeur d'un flux lumineux uniforme par rapport à la surface de bague de récipients, afin de s'adapter aux différentes pentes, largeurs et diamètres des bagues des récipients.

La présente invention vise donc à satisfaire ce besoin en proposant un procédé permettant de détecter des défauts de surface et/ou de manque de matière sur les bagues de divers récipients, et présentant des pentes, des largeurs et des diamètres différents.

Pour atteindre un tel objectif, le procédé selon l'invention, pour détecter les défauts de surface et/ou de manque de matière, est conforme à la revendication 1.

Selon une première variante de réalisation, le procédé consiste :
■ à disposer d'un anneau lumineux, par l'intermédiaire d'une série d'anneaux lumineux élémentaires concentriques,
■ et à commander sélectivement en allumage/extinction les anneaux lumineux élémentaires afin, d'obtenir un anneau lumineux avec un diamètre déterminé et/ou une étendue déterminée.

Selon une seconde variante de réalisation, le procédé, consiste :
■ à disposer d'un anneau lumineux de diamètre réglable par l'intermédiaire du déplacement relatif entre un miroir conique par rapport à une source lumineuse annulaire plane émettant sur le miroir conique, perpendiculairement à l'axe dudit miroir,
■ et à assurer un déplacement relatif entre la source lumineuse annulaire et le miroir conique selon l'axe du miroir conique sur une hauteur donnée afin d'obtenir un anneau lumineux avec un diamètre déterminé.

Selon une caractéristique avantageuse de réalisation, le procédé consiste à polariser le faisceau lumineux incident et à polariser le faisceau lumineux réfléchi préalablement à sa récupération par la caméra.

Un autre objet de l'invention est de proposer un dispositif d'éclairage pour un poste de détection de défauts de surface et/ou de manque de matière sur la bague d'un récipient, conforme à la revendication 5.

Selon une première variante de réalisation, le système d'éclairage, fournissant un anneau lumineux, est constitué par une série de sources lumineuses annulaires élémentaires montées concentriquement les unes par rapport aux autres, tandis que les moyens de création d'un anneau lumineux sont formés par une unité de commande sélective en allumage/extinction des sources lumineuses annulaires élémentaires.

Selon une deuxième variante de réalisation, le système d'éclairage, fournissant un anneau lumineux de diamètre variable, est constitué par un miroir conique monté mobile relativement à une source lumineuse annulaire plane émettant sur le miroir conique perpendiculairement à l'axe dudit miroir, et tandis que les moyens de création d'un anneau lumineux à une valeur de diamètre donnée sont formés par des moyens de commande en déplacement relatif entre le miroir conique et la source lumineuse annulaire plane, selon l'axe du miroir et sur une hauteur donnée afin d'obtenir un anneau lumineux avec un diamètre déterminé.

Selon une autre forme de réalisation de la deuxième variante de réalisation, la source lumineuse annulaire plane comporte une source lumineuse annulaire émettant en direction d'un cône de renvoi du faisceau lumineux, selon une direction perpendiculaire à l'axe du miroir conique, le cône de renvoi étant monté mobile ou non selon l'axe du miroir conique.

Selon une caractéristique de réalisation, le système optique dé convergence de l'anneau lumineux est une lentille de type Fresnel.

Selon une autre caractéristique de réalisation, le dispositif d'éclairage comporte un diffuseur de lumière interposé entre le système optique de convergence et les sources lumineuses annulaires.

Selon une autre caractéristique de l'invention, le dispositif d'éclairage comporte un polariseur, interposé entre le système d'éclairage et le récipient, afin de polariser le faisceau lumineux incident et un polariseur placé pour filtrer le faisceau lumineux réfléchi.

Selon une autre caractéristique de réalisation, le système d'éclairage comporte au centre de son anneau lumineux de diamètre variable, une zone de visée pour une caméra.

Selon une autre caractéristique de réalisation, le dispositif d'éclairage comporte, dans la zone de visée de la caméra, un élément optique semi-réfléchissant apte à transmettre un flux lumineux additionnel en direction du récipient à inspecter et à assurer la transmission, vers la caméra, du faisceau lumineux réfléchi par le récipient.

Un autre objet de l'invention est de proposer un poste de détection des défauts de surface et/ou de manque de matière sur la bague d'un récipient présentant un axe de symétrie. Un tel poste de détection est conforme à la revendication 14.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une vue schématique en élévation montrant la mise en oeuvre du procédé conforme à l'invention, à l'aide d'une première variante de réalisation d'un dispositif d'éclairage.

La **fig. 2** est une vue schématique explicitant le principe du procédé d'éclairage conforme à l'invention.

La **fig. 3** est une vue de dessus d'un exemple de réalisation d'une source d'éclairage mise en oeuvre par le dispositif d'éclairage conforme à l'invention.

La **fig. 4** est un exemple d'une image obtenue à l'aide du procédé selon l'invention.

La **fig. 5** est une vue schématique en élévation d'une deuxième variante de réalisation d'un dispositif d'éclairage conforme à l'invention.

La **fig. 6** illustre une variante de réalisation du second mode de réalisation illustré à la **fig. 5****.**

La **fig. 7** illustre une autre caractéristique du dispositif d'éclairage conforme à l'invention.

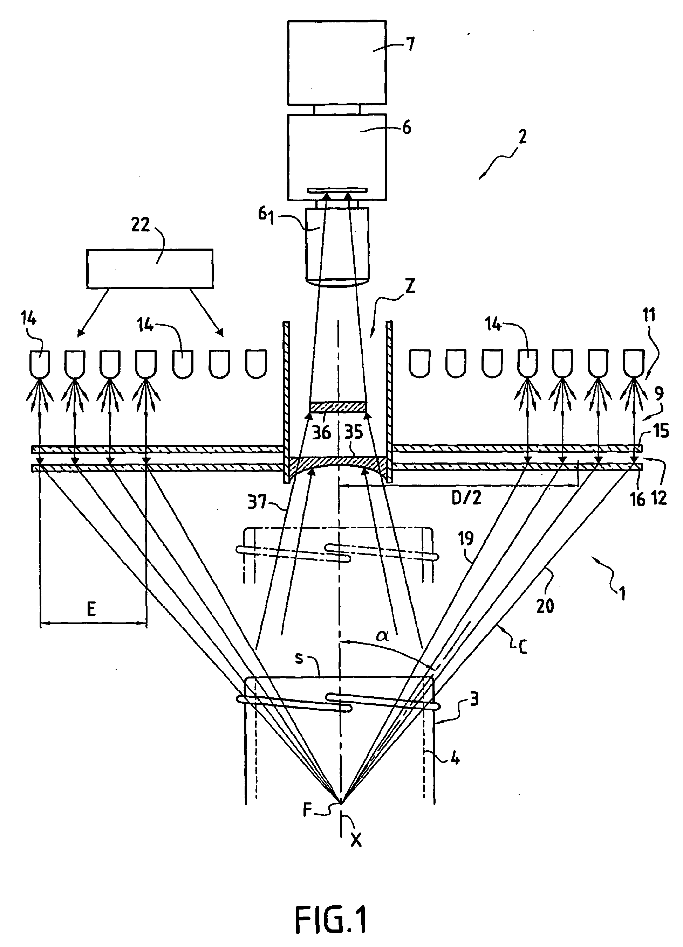

La **fig. 1** illustre un dispositif d'éclairage **1** conforme à l'invention pour un poste **2** de détection de défauts de surface et/ou de manque de matière, susceptibles d'apparaître sur la surface s de la bague **3** d'un récipient **4** par exemple à caractère transparent ou translucide présentant un axe de symétrie ou de révolution X.

De manière classique, un tel poste de détection **2** comporte une caméra matricielle **6,** placée pour récupérer le faisceau lumineux réfléchi par la surface s de la bague **3** du récipient **4.** Cette caméra **6** est reliée à une unité de traitement et d'analyse **7,** adaptée pour analyser le signal vidéo délivré par la caméra, afin de déterminer la présence d'un défaut de surface et/ou de manque de matière sur la bague **3.** L'unité de traitement et d'analyse **7** ne sera pas décrite plus précisément, dans la mesure où elle ne fait pas partie de l'objet de l'invention et fait partie des connaissances de l'homme du métier.

Un tel poste de détection **2** comprenant le dispositif d'éclairage **1** selon l'invention permet la mise en oeuvre d'un procédé optique de détection des défauts de surface et/ou de manque de matière sur la surface de la bague **3.**

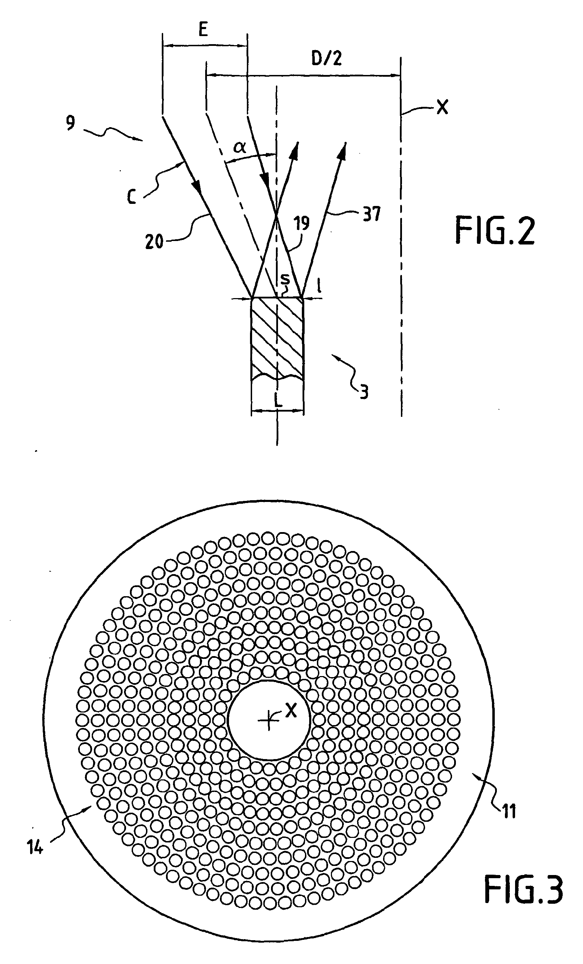

Conformément à l'invention, le dispositif d'éclairage **1** comporte tel que cela ressort plus précisément des **fig. 1** et **2**, des moyens d'éclairage **9** aptes à fournir un faisceau lumineux uniforme convergent **C,** vers un point de convergence **F** situé sur l'axe de symétrie **X** du récipient **4** et présentant un diamètre **D** variable et une étendue ou largeur **E** variable. Dans l'exemple de réalisation illustré aux **fig. 1** et **3****,** les moyens d'éclairage **9** comportent un système d'éclairage **11** apte à fournir un anneau lumineux **12,** de diamètre **D** variable et/ou d'étendue ou de largeur **E** variable. Dans la variante de réalisation, illustrée aux **fig. 1** et **3**, le système d'éclairage **11** est constitué par une série de sources lumineuses annulaires élémentaires **14,** au nombre de dix dans l'exemple illustré, montées concentriquement les unes par rapport aux autres, en laissant subsister, au centre, une zone de visée **Z** pour la caméra **6.** Ces sources lumineuses élémentaires annulaires **14** peuvent être réalisées par des tubes, des anneaux de fibres optiques ou des sources unitaires, telles que des diodes électroluminescences, disposés en anneaux concentriques, comme illustré à la **fig. 3**. Chaque source lumineuse élémentaire annulaire **14** est donc apte à fournir un anneau de lumière élémentaire présentant une largeur donnée identique ou différente de celle des autres anneaux lumineux élémentaires et s'étendant de manière adjacente à un ou deux autres anneaux élémentaires en fonction de leur position.

Selon une caractéristique préférée de réalisation, le système d'éclairage **11** comporte un diffuseur de lumière **15** placé devant les sources élémentaires annulaires **14,** de manière à obtenir un anneau lumineux uniforme **12** de largeur ou d'étendue **E,** constitué à partir d'un ou de plusieurs anneaux élémentaires, de préférence voisins. Il est à noter que, sur la **fig. 1**, sont représentés uniquement les rayons moyens de lumières élémentaires fournis par les sources **14.**

Selon la variante illustrée sur les dessins, les moyens d'éclairage **9** comportent également un système optique **16** de convergence ou de focalisation de l'anneau lumineux uniforme **12** en un point de convergence **F,** situé sur l'axe de symétrie **X** du récipient, de manière à éclairer la surface **s** de la bague **3** du récipient par un faisceau lumineux uniforme convergent **C.** Selon une variante préférée de réalisation, le système optique de focalisation **16** est une lentille, de type Fresnel. Tel que cela ressort de la **fig. 1****,** le diffuseur de lumière **15** est interposé entre la lentille de Fresnel **16** et les sources élémentaires annulaires **14.**

Chaque faisceau lumineux uniforme convergent **C** provenant de l'anneau lumineux uniforme **12,** est donc délimité entre deux cônes lumineux **19** et **20** ayant le même sommet, point de convergence ou foyer **F.** Ce faisceau lumineux convergent **C** présente donc un angle incident moyen α pris en considération du rayon moyen du faisceau convergent **C.** Chaque cône lumineux **19, 20,** délimitant respectivement, intérieurement et extérieurement le faisceau lumineux convergent **C,** présente donc un angle d'incidence α différent. Il est à notera que l'angle d'incidence α pour le faisceau lumineux convergent **C** peut évoluer entre, par exemple, 0 et 60° et, de préférence, entre 0 et 45°.

Le dispositif d'éclairage **1** selon l'invention comporte, également, des moyens **22** pour créer un faisceau lumineux uniforme convergent **C** présentant une valeur de diamètre **D** donnée en relation de l'angle incident moyen α souhaité pour éclairer la surface s de la bague **3** et/ou une valeur d'étendue **E** à une valeur donnée en relation de la largeur **L** de la surface s de la bague du récipient. Dans l'exemple de réalisation illustré aux **fig. 1** et **3**, les moyens **22** de création d'un faisceau lumineux convergent **C** sont formés par une unité de commande sélective en allumage/extinction des sources lumineuses élémentaires **14.** Cette unité de commande **22** permet de piloter sélectivement le fonctionnement, en allumage/extinction, des sources lumineuses annulaires élémentaires **14,** de manière à sélectionner :
■ le diamètre **D** de l'anneau lumineux **12** et, par suite, l'angle incident moyen α du faisceau lumineux convergent **C,**
■ et/ou la largeur **E** dudit anneau en fonction du nombre de sources d'éclairages annulaires **14** allumées.

En effet, en fonction de la position de la ou des source(s) élémentaire(s) commandée(s) en allumage, il peut être obtenu un angle incident α avec des valeurs différentes. De même, il peut être prévu de commander simultanément en allumage une ou plusieurs sources lumineuses annulaires élémentaires **14,** voisines les unes des autres, de manière à agir sur la largeur ou l'étendue **E** de l'anneau lumineux **12** et, par suite, du faisceau lumineux focalisé **C.** Dans l'exemple illustré à la **fig. 1****,** les quatre sources élémentaires annulaires les plus proches de la périphérie sont allumées alors que les autres sources **14** sont éteintes.

Un tel dispositif d'éclairage **1** permet donc de disposer d'un faisceau de lumière convergent **C** avec un angle incident moyen α réglable et/ou une largeur **E** réglable. Un tel angle d'incidence d'éclairage réglable permet de s'adapter à la pente des bagues **3**. La largeur **E** du faisceau de lumière convergent **C** permet d'obtenir un éclairage uniforme sur toute la surface **3** de la bague d'un récipient, quel que soit le diamètre présenté par la bague et la largeur **L** de la surface s de bague. Il est à noter que le faisceau lumineux convergent **C** présente, au niveau de la surface s de la bague. **3,** une largeur 1 égale ou supérieure à la largeur **L** de la surface s de la bague.

Il est à noter que le récipient **4** peut être déplacé selon son axe de symétrie **X,** afin de régler la position de la surface s de bague par rapport au faisceau lumineux convergent **C.**

Selon une caractéristique avantageuse de réalisation, le dispositif d'éclairage **1** comporte un polariseur, non représenté, interposé entre le système d'éclairage **11** et le récipient **4,** afin de polariser le faisceau lumineux incident **C.** De préférence, le faisceau lumineux **C** est polarisé circulairement par un polariseur circulaire monté entre la lentille de Fresnel **16** et le récipient **4.** Un polariseur, de même type circulaire que celui utilisé pour le faisceau incident, est placé devant l'objectif de la caméra **6** pour filtrer le faisceau lumineux réfléchi. La lumière, réfléchie sur la surface de la bague **3,** n'est pas dépolarisée et passe donc sans atténuation au travers du polariseur placé devant l'objectif de la caméra **6.** Par contre, la lumière parasite qui a subi des réflexions multiples à l'intérieur du récipient **4** est, en partie, dépolarisée et donc atténuée au passage du polariseur placé devant la caméra. Une telle polarisation permet d'atténuer la lumière parasite par rapport à la lumière d'éclairage incident.

Tel que cella ressort clairement de la **fig. 1**, les moyens d'éclairage **9** comportent, au centre de son anneau lumineux **12,** une zone **Z** de visée pour la caméra **6.** Cette zone de visée **2** est aménagée au centre du système d'éclairage **1** qui ne comporte pas dans cette zone, de sources lumineuses annulaires élémentaires **14.** Par exemple, cette zone de visée **Z** peut être occupée par une lentille divergente **35** formant une première image **36** de la bague **3** reprise, à l'aide d'un système **6₁** à focal variable, tel qu'un zoom de mise au point courte, associé à la caméra **6.**

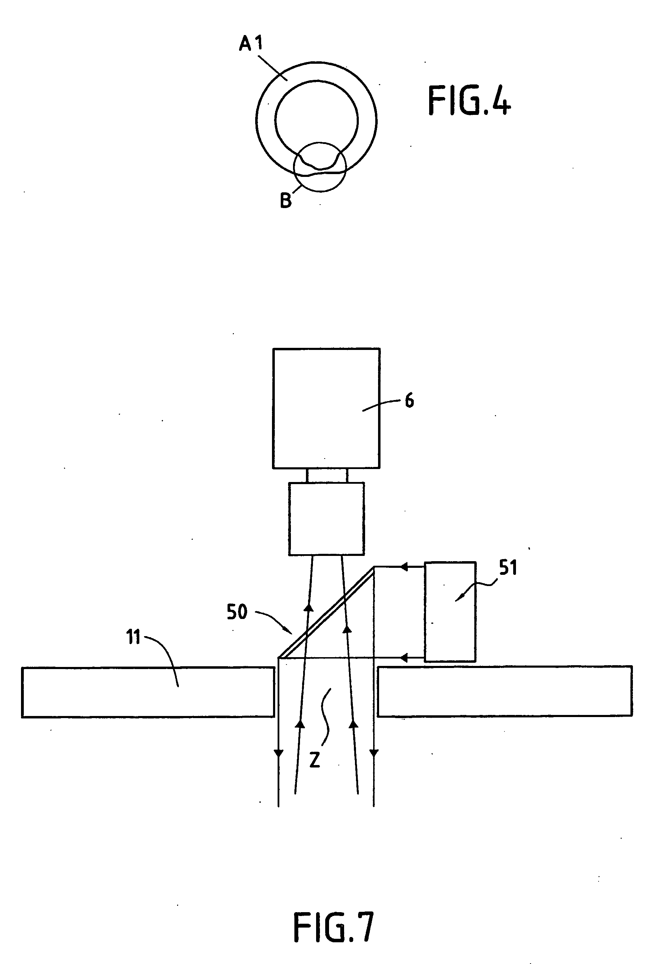

Le dispositif d'éclairage **1** selon l'invention est particulièrement adapté pour permettre la détection des défauts apparaissant sur la surface **s** des bagues de récipients et notamment les défauts de manque de matière. Tel que cela apparaît à la **fig. 4**, le flux lumineux réfléchi **37** par la surface **s** de bague donne un anneau lumineux **A1** qui, lorsqu'un défaut de manque de matière est présent sur la surface de bague **3,** possède une zone sombre **B** correspondant au défaut.

Il doit être considéré que tout défaut apparaissant sur la surface s provoque, soit un manque de lumière, soit une concentration locale de lumière, se traduisant par une tâche sombre ou une surintensité détectable par l'unité de traitement et d'analyse 7.

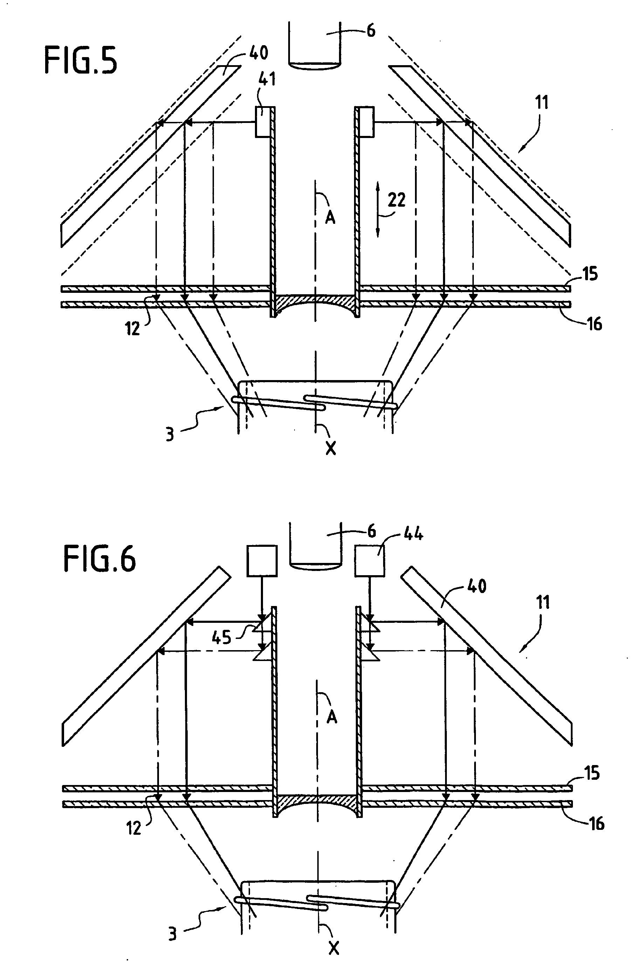

La **fig. 5** illustre une deuxième variante de réalisation du système d'éclairage **11** fournissant un anneau lumineux uniforme **12** de diamètre variable. Selon cette variante de réalisation, le système d'éclairage **11** est constitué par un miroir conique **40** qui dans l'exemple illustré possède sa surface interne polie. Le système d'éclairage **11** comporte aussi une source lumineuse annulaire plane **41** émettant sur le miroir conique et plus précisément sur la surface polie interne, perpendiculairement à l'axe A du miroir conique **40** qui est co-linéaire à l'axe de symétrie X du récipient. Le miroir conique **40** et la source lumineuse annulaire **41** sont montés mobiles relativement l'un par rapport à l'autre, selon l'axe **A** du miroir conique **40.**

Selon cette variante de réalisation, les moyens **22** de création d'un anneau lumineux **12** à une valeur de diamètre donné sont formés par des moyens de commande en déplacement relatif, entre le miroir conique **40** et la source lumineuse annulaire plane **41.** Ces moyens de commande **22** permettent d'assurer le déplacement relatif entre le miroir conique **40** et la source lumineuse annulaire plane **41,** selon l'axe **A** du miroir conique **41** et selon une hauteur donnée, afin d'obtenir un anneau lumineux **12** avec un diamètre déterminé. Bien entendu, il peut être prévu de déplacer, soit le miroir conique **40,** soit la source lumineuse **41** ou les deux.

Dans l'exemple de réalisation illustré, la source lumineuse plane **41** peut être réalisée de différentes manières, par exemple par l'intermédiaire d'une fibre optique, d'une ampoule, d'un tube fluorescent, de diodes électroluminescentes, etc. Par ailleurs, le faisceau lumineux annulaire est dirigé, comme expliqué dans l'exemple illustré à la **fig.1****,** vers le diffuseur de lumière **15** et la lentille de Fresnel **16.**

La **fig. 6** illustre une autre variante de réalisation, dans laquelle la source lumineuse annulaire plane **41** est constituée par une source lumineuse annulaire **44,** émettant, selon une direction sensiblement parallèle à l'axe **A** du miroir conique **40,** en direction d'un cône **45** de renvoi du faisceau lumineux en direction perpendiculaire à l'axe du miroir conique **40.** Le cône de renvoi **45** peut être monté mobile relativement au miroir conique, de manière à obtenir un anneau lumineux **12** de diamètre variable. Bien entendu, il peut être également prévu de monter le cône de renvoi **45** fixe, alors que le miroir conique **40** est monté mobile, comme expliqué ci-dessus.

Il est à noter que, dans les exemples de réalisation illustrés aux **fig. 5** et **6**, la source lumineuse **41, 44** émet sur la surface interne d'un miroir conique **40.** Bien entendu, il peut être envisagé que la source lumineuse envoie son faisceau sur la surface externe polie du miroir conique **41,** avec inversion du sens du miroir conique **40.**

Il est à noter que le montage illustré à la **fig. 6** permet également de régler l'étendue **E** de l'anneau lumineux **12.** En effet, dans la mesure où la source lumineuse annulaire **44** est divergente, (par exemple selon un angle de 60° dans le cas d'une fibre optique), l'étendue **E** de l'anneau lumineux **12** projeté sur le diffuseur de lumière **15** varie lorsque l'on modifie la longueur du chemin optique des rayons lumineux entre la source **44** et le diffuseur **15** qui passe par le cône de renvoi **45** et le miroir conique **40.** Une telle modification du chemin optique des rayons lumineux peut être obtenue en déplaçant la source **44** le long de l'axe **A** du miroir.

La **fig. 7** illustre une variante préférée de réalisation du dispositif d'éclairage **1** dans laquelle il est prévu de produire un éclairage additionnel avec des rayons parallèles ou quasi-parallèles à l'axe **X** du récipient compte tenu de la présence de la zone de visée **Z** pour la caméra **6.** En effet, cette zone de visée **Z,** située au centre des moyens d'éclairage **9,** ne permet pas de disposer de rayons lumineux avec des angles incidents correspondants. Selon cette variante de réalisation, un faisceau lumineux additionnel est fourni dans cette zone de visée **Z,** afin d'obtenir des angles d'incidences complémentaires par rapport à ceux obtenus par l'anneau lumineux uniforme **12.**

Selon cet exemple de réalisation, le système d'éclairage **11** comporte dans sa zone de visée **Z,** un élément optique **50** semi-réfléchissant, tel qu'une lame semi-réfléchissante apte à transmettre un flux lumineux additionnel selon une direction parallèle à l'axe **X** en direction du récipient **4,** et provenant d'une source lumineuse additionnelle **51.** L'élément optique semi-réfléchissant **50** autorise la transmission vers la caméra **6** du faisceau lumineux réfléchi **37** par le récipient **4.**

L'invention n'est pas limitée aux exemples décrits et représentés car diverses modifications peuvent y être apportées sans sortir du cadre des revendications.

## Revendications

1. Procédé optique pour déterminer des défauts de surface et/ou de manque de matière sur la bague (**3**) d'un récipient (**4**) présentant un axe de symétrie (**X**), le procédé comprenant les étapes suivantes :
■ éclairer la surface (**s**) de la bague (**3**) du récipient (**4**) par un faisceau lumineux incident,
■ et récupérer, par une caméra matricielle (**6**), les faisceaux lumineux réfléchis par la bague du récipient, afin de déterminer la présence d'un défaut de surface et/ou de manque de matière,
**caractérisé en ce qu'**il consiste :
■ à disposer d'un anneau lumineux uniforme (**12**) présentant un diamètre (**D**) réglable et/ou une étendue (**E**) réglable prise perpendiculairement à l'axe de symétrie (**X**),
■ à obtenir de l'anneau lumineux (**12**) un faisceau lumineux uniforme convergent (**C**) sur un point de convergence (**F**) situé sur l'axe de symétrie (**X**) du récipient de manière à éclairer la surface (**s**) de la bague du récipient,
■ à sélectionner:
• le diamètre (**D**) de l'anneau lumineux (**12**) à une valeur donnée en relation de l'angle incident moyen (α) souhaité pour éclairer la surface (**s**) de la bague (**3**) du récipient (**4**),
• et/ou l'étendue (**E**) de l'anneau lumineux (12) à une valeur donnée en relation de la largeur (**L**) de la surface (**s**) de la bague (**3**) du récipient (**4**).
■ et à récupérer les faisceaux lumineux réfléchis (**37**) par la surface (**s**) de la bague donnant un anneau lumineux (**A₁**) permettant de déterminer la présence de défauts se traduisant par un manque de lumière ou une concentration locale de lumière.

2. Procédé selon la revendication 1, **caractérisé en ce qu'**il consiste :
■ à disposer d'un anneau lumineux (**12**), par l'intermédiaire d'une série d'anneaux lumineux élémentaires concentriques (**14**),
■ et à commander sélectivement en allumage/extinction les anneaux lumineux élémentaires (**14**) afin d'obtenir un anneau lumineux (**12**) avec un diamètre déterminé (**D**) et/ou une étendue déterminée (**E**).

3. Procédé selon la revendication 1, **caractérisé en ce qu'**il consiste :
■ à disposer d'un anneau lumineux (**12**) de diamètre réglable par l'intermédiaire du déplacement relatif entre un miroir conique (**40**) par rapport à une source lumineuse annulaire plane (**41, 44**) émettant sur le miroir conique, perpendiculairement à l'axe (**A**) dudit miroir,
■ et à assurer un déplacement relatif entre la source lumineuse annulaire (**41, 44**) et le miroir conique (**40**) selon l'axe (**A**) du miroir conique (**40**) sur une hauteur donnée afin d'obtenir un anneau lumineux avec un diamètre déterminé.

4. Procédé selon l'une des revendications 1 à 3, **caractérisé en ce qu'**il consiste à polariser le faisceau lumineux incident et à polariser le faisceau lumineux réfléchi préalablement à sa récupération par la caméra (**6**).

5. Dispositif d'éclairage pour un poste de détection des défauts de surface et/ou de manque de matière sur la bague (**3**) d'un récipient (**4**) présentant un axe de symétrie (**X**) **caractérisé en ce qu'**il comprend :
■ des moyens d'éclairage (**9**) comportant
■ un système d'éclairage (**11**) fournisant un anneau lumineux uniforme (**12**) de diamètre réglable et/ou d'étendue réglable (**E**),
■ et un système optique (**16**) pour obtenir de l'anneau lumineux (**12**) un faisceau lumineux uniforme convergent (**C**) sur un point de convergence (**F**) **s**itué sur l'axe de symétrie (**X**) du récipient de manière à éclairer la surface (**s**) de la bague (**3**) du récipient.
■ et des moyens (**22**) pour sélectionner une valeur de diamètre (**D**) de l'anneau lumineux uniforme (**12**) donnée en relation de l'angle incident moyen (α) souhaité pour éclairer la surface de la bague du récipient et/ou une étendue (**E**) de l'anneau lumineux uniforme (**12**) à une valeur donnée en relation de la largeur (**L**) de la surface (**s**) de la bague (**3**) du récipient (**4**).

6. Dispositif selon la revendication 5, **caractérisé en ce que** le système d'éclairage (**11**), fournissant un anneau lumineux (**12**), est constitué par une série de sources lumineuses annulaires élémentaires (**14**) montées concentriquement les unes par rapport aux autres et **en ce que** les moyens (**22**) de création d'un anneau lumineux (**12**) sont formés par une unité de commande sélective en allumage/extinction des sources lumineuses annulaires élémentaires (**14**)**.**

7. - Dispositif selon la revendication 5, **caractérisé en ce** le système d'éclairage (**11**), fournissant un anneau lumineux (**12**) de diamètre variable, est constitué par un miroir conique (**40**) monté mobile relativement à une source lumineuse annulaire plane (**41**) émettant sur le miroir conique perpendiculairement à l'axe dudit miroir, et en ce que les moyens (**22**) de création d'un anneau lumineux à une valeur de diamètre donnée sont formés par des moyens de commande en déplacement relatif entre le miroir (**40**) conique et la source lumineuse annulaire plane (**41**), selon l'axe du miroir et sur une hauteur donnée afin d'obtenir un anneau lumineux avec un diamètre déterminé.

8. Dispositif selon la revendication 7, **caractérisé en ce que** la source lumineuse annulaire plane comporte une source lumineuse annulaire (**44**) émettant en direction d'un cône de renvoi (**45**) du faisceau lumineux, selon une direction perpendiculaire à l'axe du miroir conique, le cône de renvoi (**45**) étant monté mobile ou non selon l'axe du miroir conique.

9. Dispositif selon la revendication 5, **caractérisé en ce que** le système optique de convergence (**16**) de l'anneau lumineux est une lentille de type Fresnel.

10. Dispositif selon l'une des revendications 5 à 9, **caractérisé en ce qu'**il comporte un diffuseur de lumière (**15**) interposé entre le système optique de convergence (**16**) et les sources lumineuses annulaires (**14, 41, 44**).

11. Dispositif selon l'une des revendications 5 à 10, **caractérisé en ce qu'**il comporte un polariseur interposé entre le système d'éclairage et le récipient afin de polariser le faisceau lumineux incident et un polariseur placé pour filtrer le faisceau lumineux réfléchi.

12. Dispositif selon l'une des revendications 5 à 11, **caractérisé en ce que** le système d'éclairage (**11**) comporte au centre de son anneau lumineux (**12**) de diamètre variable, une zone de visée (**Z**) pour une caméra (**6**).

13. Dispositif selon la revendication 12, **caractérisé en ce qu'**il comporte, dans la zone de visée (**Z**) de la caméra, un élément optique semi-réfléchissant (**50**) apte à transmettre un flux lumineux additionnel en direction du récipient à inspecter (**4**) et à assurer la transmission, vers la caméra **(6),** du faisceau lumineux réfléchi par le récipient.

14. Poste de détection des défauts dé surface et/ou de manque de matière sur la bague d'un récipient **(4)** présentant un axe de symétrie **(X), caractérisé en ce qu'**il comporte :
■ un dispositif d'éclairage **(1)** conforme à l'une des revendications 5 à 13,
■ une caméra matricielle **(6)** placée pour récupérer le faisceau lumineux réfléchi par la surface de la bague du récipient, donnant un anneau lumineux (**A₁**),
■ et une unité de traitement et d'analyse **(7)** reliée à la caméra **(6)** et adaptée pour analyser le signal vidéo délivré par la caméra afin de déterminer la présence d'un défaut de surface et/ou de manque de matière, se traduisant par un manque de lumière ou une concentration locale de lumière, dans l'anneau lumineux (**A₁**).

## Claims

1. Optical method for determining surface defects and/or material shortage on the neck ring **(3)** of a container **(4)** having an axis of symmetry **(X),** the method comprising the following steps:
■ illuminating the surface (**s**) of the neck ring **(3)** of the container **(4)** with an incident light beam,
■ and collecting, via a area scan camera **(6),** the light beams reflected by the neck ring of the container, in order to determine the presence of a surface defect and/or material shortage,
**characterized in that** it consists of:
■ obtaining a uniform ring of light **(12)** having an adjustable diameter **(D)** and/or an adjustable extent taken perpendicular to the axis of symmetry **(X),**
■ obtaining from the ring of light (**12**) a convergent uniform light beam **(C),** on a point of convergence **(F)** located on the axis of symmetry **(X)** of the container so as to illuminate the surface (**s**) of the neck ring of the container,
■ selecting:
• the diameter **(D)** of the ring of light **(12)** at a given value in relation to a desired mean angle of incidence (α) to illuminate the surface (**s**) of the neck ring **(3)** of the container **(4),**
• and/or the extent **(E)** of the ring of light **(12)** at a given value in relation to the width **(L)** of the surface (**s**) of the neck ring **(3)** of container **(4),**
■ and collecting the flow of light **(37)** reflected by the surface (**s**) of the neck ring giving a ring of light (**A₁**) making it possible to determine the presence of defects translating as a lack of light or a local concentration of light.

2. Method according to claim 1, **characterized in that** it consists of:
■ obtaining a ring of light (**12**), via a series of elementary concentric rings of light **(14),** and
■ selectively commanding the switching on/off of the elementary rings of light **(14)** in order to obtain a ring of light **(12)** of determined diameter **(D)** and/or of determined extent **(E).**

3. Method according to claim 1, **characterized in that** it consists of:
■ obtaining a ring of light **(12)** of adjustable diameter through the relative movement of a conical mirror **(40)** in relation to a planar annular light source **(41, 44)** emitting onto the conical mirror, perpendicular to the axis **(A)** of said mirror, and
■ ensuring relative movement between the annular light source **(41, 44)** and the conical mirror **(40)** along axis **(A)** of the conical mirror **(40)** over a given height to obtain a ring of light of determined diameter.

4. Method according to one of claims 1 to 3, **characterized in that** it consists of polarizing the incident light beam and of polarizing the reflected light beam before it is received by the camera **(6).**

5. Illumination device for a detection station to detect surface defects and/or material shortage on the neck ring **(3)** of a container **(4)** having an axis of symmetry **(X), characterized in that** it comprises:
■ illumination means **(9)** comprising:
• an illumination system **(11)** providing a uniform ring of light (**12**) of adjustable diameter and/or of adjustable extent **(E),** and
• an optical system **(16)** for obtaining from the ring of light **(12)** a convergent uniform light beam **(C)** onto a point of convergence **(F)** located on the axis of symmetry **(X)** of the container so as to illuminate the surface (**s**) of the neck ring **(3)** of the container,
■ and means **(22)** for selecting a diameter value **(D)** of the uniform ring of light **(12)** given in relation to the desired mean angle of incidence (α) to illuminate the surface of the neck ring of the container and/or an extent **(E)** of the uniform ring of light **(12)** of given value in relation to the width **(L)** of the surface (**s**) of the neck ring **(3)** of container **(4).**

6. Device according to claim 5, **characterized in that** the illumination system **(11),** providing a ring of light **(12),** consists of a series of elementary annular light sources **(14)** mounted in concentric fashion with respect to one another, and **in that** the means **(22)** for creating a ring of light **(12)** are formed by a selective switch on/off command unit for the elementary annular light sources **(14).**

7. Device according to claim 5, **characterized in that** the illumination system **(11),** providing a ring of light **(12)** of variable diameter consists of a conical mirror **(40)** movably mounted with respect to a planar annular light source **(41)** emitting onto the conical mirror perpendicular to the axis of said mirror, and **in that** the means **(22)** for creating a ring of light of given diameter are formed by means commanding the relative movement of the conical mirror **(40)** in relation to the planar annular light source **(41),** along the axis of the mirror and over a given height to obtain a ring of light of determined diameter.

8. Device according to claim 7, **characterized in that** the planar annular light source comprises an annular light source **(44)** emitting in the direction of a return cone **(45)** returning the beam of light, along a direction perpendicular to the axis of the conical mirror, the return cone **(45)** being mounted mobile or non-mobile fashion on the axis of the conical mirror.

9. Device according to claim 5, **characterized in that** the optical convergence system **(16)** for the ring of light is a lens of Fresnel type.

10. Device according to one of claims 5 to 9, **characterized in that** it comprises a light diffuser **(15)** positioned between the optical converging system (**16**) and the annular light sources **(14, 41, 44).**

11. Device according to one of claims 5 to 10, **characterized in that** it comprises a polarizer interposed between the illumination system and the container to polarize the incident light beam, and a polarizer positioned to filter the reflected light beam.

12. Device according to one of claims 5 to 11, **characterized in that** the illumination system **(11),** at the centre of its ring of light **(12)** of variable diameter, comprises a sighting zone **(Z)** for a camera **(6).**

13. Device according to claim 12, **characterized in that** in the camera's sighting zone **(Z)** it comprises a semi-reflective optical element **(50)** able to transmit an additional flow of light in the direction of the container to be inspected **(4)** and to ensure the transmission to camera **(6),** of the light beam reflected by the container.

14. Detection station to detect surface defects and/or material shortage on the neck ring of a container **(4)** having an axis of symmetry **(X), characterized in that** it comprises:
■ an illumination device **(1)** in accordance with one of claims 5 to 13,
■ a area scan camera **(6)** positioned so as to receive the light beam reflected by the surface of the neck ring of the container, giving a ring of light (**A₁**), and
■ a processing and analysis unit **(7)** connected to camera **(6)** and adapted to analyse the video signal delivered by the camera in order to determine the presence of any surface defect and/or material shortage, translating as a lack of light or a local concentration of light, in the ring of light (**A₁**).

## Patentansprüche

1. Optisches Verfahren zur Bestimmung von Oberflächenfehlern und/oder Materialfehlstellen an der Mündung (3) eines Behälters (4) mit einer Symmetrieachse (X), wobei das Verfahren die folgenden Schritte umfaßt:
- Beleuchten der Oberfläche (s) der Mündung (3) des Behälters (4) mittels eines einfallenden Lichtstrahls, und
- Auffangen der durch die Mündung des Behälters reflektierten Lichtstrahlen durch eine Matrixkamera (6), um das Vorliegen eines Oberflächenfehlers und/oder einer Materialfehlstelle zu bestimmen,
**dadurch gekennzeichnet, daß** es darin besteht:
- über einen gleichmäßigen Leuchtring (12) mit einstellbarem Durchmesser (D) und/oder einstellbarer Ausdehnung, senkrecht zur Symmetrieachse (X) gesehen, zu verfügen,
- aus dem Leuchtring (12) einen gleichmäßigen konvergenten Lichtstrahl (C) an einem auf der Symmetrieachse (X) des Behälters gelegenen Konvergenzpunkt (F) zu erhalten, um die Oberfläche (s) der Mündung des Behälters zu beleuchten,
- folgendes zu wählen:
-- den Durchmesser (D) des Leuchtrings (12) mit einem gegebenen Wert im Verhältnis zu dem gewünschten mittleren Einfallswinkel (α), um die Oberfläche (s) der Mündung (3) des Behälters (4) zu beleuchten, und/oder
-- die Ausdehnung (E) des Leuchtrings (12) mit einem gegebenen Wert im Verhältnis zur Breite (L) der Oberfläche (s) der Mündung (3) des Behälters (4),
- und die durch die Oberfläche (s) der Mündung reflektierten Lichtstrahlen (37), die einen Leuchtring (A₁) ergeben, aufzufangen, was ermöglicht, das Vorliegen von Fehlern, die durch ein Fehlen an Licht oder durch eine lokale Lichtkonzentration zum Ausdruck kommen, zu bestimmen.

2. Verfahren nach Anspruch 1, **dadurch gekennzeichnet, daß** es darin besteht:
- mittels einer Reihe einzelner konzentrischer Leuchtringe (14) über einen Leuchtring (12) zu verfügen, und
- das Einschalten/Ausschalten der einzelnen Leuchtringe (14) selektiv zu steuern, um einen Leuchtring (12) mit einem bestimmten Durchmesser (D) und/oder einer bestimmten Ausdehnung (E) zu erhalten.

3. Verfahren nach Anspruch 1, **dadurch gekennzeichnet, daß** es darin besteht:
- durch die Relativbewegung zwischen einem konischen Spiegel (40) und einer planen, ringförmigen Lichtquelle (41, 44), die auf den konischen Spiegel, senkrecht zur Achse (A) des Spiegels aussendet, über einen Leuchtring (12) mit einstellbarem Durchmesser zu verfügen, und
- eine Relativbewegung zwischen der ringförmigen Lichtquelle (41, 44) und dem konischen Spiegel (40) entlang der Achse (A) des konischen Spiegels (40) über eine gegebene Höhe sicherzustellen, um einen Leuchtring mit einem bestimmten Durchmesser zu erhalten.

4. Verfahren nach einem der Ansprüche 1 bis 3, **dadurch gekennzeichnet, daß** es darin besteht, den einfallenden Lichtstrahl zu polarisieren und den reflektierten Lichtstrahl vor dessen Auffangen durch die Kamera (6) zu polarisieren.

5. Beleuchtungsvorrichtung für eine Station zur Erfassung von Oberflächenfehlern und/oder Materialfehlstellen an der Mündung (3) eines Behälters (4) mit einer Symmetrieachse (X), **dadurch gekennzeichnet, daß** sie folgendes umfaßt:
- Beleuchtungsmittel (9), die folgendes umfassen:
- ein Beleuchtungssystem (11), das einen gleichmäßigen Leuchtring (12) mit einstellbarem Durchmesser und/oder einstellbarer Ausdehnung (E) liefert, und
- ein optisches System (16), um aus dem Leuchtring (12) einen gleichmäßigen konvergenten Lichtstrahl (C) an einem auf der Symmetrieachse (X) des Behälters gelegenen Konvergenzpunkt (F) zu erhalten, um die Oberfläche (s) der Mündung (3) des Behälters zu beleuchten,
- sowie Mittel (22) zum Auswählen eines gegebenen Durchmesserwertes (D) des gleichmäßigen Leuchtrings (12) im Verhältnis zum gewünschten mittleren Einfallswinkel (α), um die Oberfläche der Mündung des Behälters zu beleuchten, und/oder einer Ausdehnung (E) des gleichmäßigen Leuchtrings (12), mit einem gegebenen Wert im Verhältnis zur Breite (L) der Oberfläche (s) der Mündung (3) des Behälters (4).

6. Vorrichtung nach Anspruch 5, **dadurch gekennzeichnet, daß** das einen Leuchtring (12) liefernde Beleuchtungssystem (11) aus einer Reihe von einzelnen ringförmigen, konzentrisch zueinander angeordneten Lichtquellen (14) besteht und daß die Mittel (22) zum Erzeugen eines Leuchtrings (12) von einer Einheit zum selektiven Ein/Aus-Steuern der einzelnen ringförmigen Lichtquellen (14) gebildet sind.

7. Vorrichtung nach Anspruch 5, **dadurch gekennzeichnet, daß** das einen Leuchtring (12) mit veränderlichem Durchmesser bildende Beleuchtungssystem (11) aus einem konischen Spiegel (40) besteht, der gegenüber einer planen, ringförmigen Lichtquelle (41), die auf den konischen Spiegel senkrecht zur Achse des Spiegels aussendet, beweglich angeordnet ist, und daß die Mittel (22) zum Erzeugen eines Leuchtrings mit einem gegebenen Durchmesserwert von Mitteln zum Steuern der Relativbewegung zwischen dem konischen Spiegel (40) und der planen, ringförmigen Lichtquelle (41) entlang der Achse des Spiegels und über eine gegebene Höhe gebildet sind, um einen Leuchtring mit einem bestimmten Durchmesser zu erhalten.

8. Vorrichtung nach Anspruch 7, **dadurch gekennzeichnet, daß** die plane, ringförmige Lichtquelle eine ringförmige Lichtquelle (44) umfaßt, die in Richtung eines Kegels (45) zum Umlenken des Lichtstrahls in eine zur Achse des konischen Spiegels senkrechte Richtung aussendet, wobei der Umlenkkegel (45) entlang der Achse des konischen Spiegels beweglich angebracht ist oder nicht.

9. Vorrichtung nach Anspruch 5, **dadurch gekennzeichnet, daß** das optische Konvergenzsystem (16) des Leuchtrings eine Linse vom Typ Fresnellinse ist.

10. Vorrichtung nach einem der Ansprüche 5 bis 9, **dadurch gekennzeichnet, daß** sie einen Lichtverteiler (15) umfaßt, der zwischen dem optischen Konvergenzsystem (16) und den ringförmigen Lichtquellen (14, 41, 44) angeordnet ist.

11. Vorrichtung nach einem der Ansprüche 5 bis 10, **dadurch gekennzeichnet, daß** sie einen zwischen dem Beleuchtungssystem und dem Behälter zwischengeschalteten Polarisator umfaßt, um den einfallenden Lichtstrahl zu polarisieren, sowie einen Polarisator, der angeordnet ist, um den reflektierten Lichtstrahl zu filtern.

12. Vorrichtung nach einem der Ansprüche 5 bis 11, **dadurch gekennzeichnet, daß** das Beleuchtungssystem (11) in der Mitte seines Leuchtrings (12) mit veränderlichem Durchmesser einen Sichtbereich (Z) für eine Kamera (6) aufweist.

13. Vorrichtung nach Anspruch 12, **dadurch gekennzeichnet, daß** sie in dem Sichtbereich (Z) der Kamera ein halbreflektierendes optisches Element (50) aufweist, das geeignet ist, einen zusätzlichen Lichtstrom in Richtung des zu untersuchenden Behälters (4) zu übertragen und die Übertragung des durch den Behälter reflektierten Lichtstrahls zur Kamera (6) sicherzustellen.

14. Station zur Erfassung von Oberflächenfehlern und/oder Materialfehlstellen an der Mündung eines Behälters (4) mit einer Symmetrieachse (X), **dadurch gekennzeichnet, daß** sie folgendes umfaßt
- eine Beleuchtungsvorrichtung (1) nach einem der Ansprüche 5 bis 13,
- eine Matrixkamera (6), die angeordnet ist, um den durch die Oberfläche der Mündung des Behälters reflektierten Lichtstrahl, der einen Leuchtring (A₁) ergibt, aufzufangen, sowie
- eine Verarbeitungs- und Analyseeinheit (7), die mit der Kamera (6) verbunden und ausgebildet ist, um das durch die Kamera gelieferte Videosignal zu analysieren, um das Vorliegen eines Oberflächenfehlers und/oder einer Materialfehlstelle, der bzw. die durch ein Fehlen an Licht oder durch eine lokale Lichtkonzentration zum Ausdruck kommt, in dem Leuchtring (A₁) zu bestimmen.
